# EUROPEAN PATENT APPLICATION

(11) **EP 2 140 994 A1**
(43) Date of publication of application: **06.01.2010**
(21) Application number: 08012030.6
(22) Date of filing: 03.07.2008
(51) Int. Cl.: B29C 44/46, A47K 10/24, C08J 9/30, A47K 10/16

(54) **Sponge, its method of manufacture, and apparatus therefor**

(71) Applicant: Irish, Peter, 3003 Gablitz (AT)
(72) Inventor: Irish, Peter, 3003 Gablitz (AT)
(74) Representative: Diehl & Partner

(57) **Abstract**

The present invention provides an on-demand, in-situ sponge making device, comprising a precursor container for providing a base paste; a foaming member for providing a the base paste with gas-filled bubbles; an extrusion chamber having an elongated opening for extruding the foamed paste therethrough; and a fixing chamber for drying the extruded paste. The invention further provides a method of manufacturing a sponge, the method comprising foaming a base paste comprising starch and cellulose; extruding the foamed paste through a slit; and drying the extruded paste while it is freely suspended. Lastly, the invention provides a sponge product, comprising a surface layer comprising a porous composition comprising mainly a starch derivative and cellulose; and an interior layer comprising gas-filled bubbles in a moist matrix comprising water, the starch derivative and cellulose; wherein the relative amount by dry weight of the starch derivative preferably exceeds the relative amount by dry weight of the cellulose.

## Description

The present invention relates to a sponge product, a method for its manufacture, and an apparatus for carrying out the method to manufacture the product in an on-demand fashion.

Today the annual worldwide consumption of consumer tissue exceeds 17 million metric tons. Focusing only on toilet paper, the production process involves several major steps, beginning typically with the felling of trees, or for a smaller share, the reprocessing of waste paper. In both case, cellulose, the main raw material, requires significant chemical, thermal, and mechanical processing through three major stages: pulp, mother reels, and final product. There is also significant handling and transportation associated before and after these stages. The production process consumes significant amounts of energy, is heavily capital intensive, and requires extensive waste water treatment. The logistical processes consume further energy, are generally also capital intensive, and suffer from the very high bulk/low value ratio of the product category, so that it is never efficient to handle toilet paper repeatedly or ship it long distances.

A very recent proposal for how to make air dried tissue may be found in International application WO 2008/027198 A2. According to this document, a wet tissue web is received from the wet end of a papermaking machine and dried by an air flotation dryer that uses an endless loop to transport and support the wet tissue web as it is dried. Other conventional machines, such as that disclosed in document US 5,656,132, use through air drying (TAD) in rotating devices.

So far there has not really been any alternative to toilet paper despite its drawbacks outlined above.

An object of the present invention is therefore to overcome these drawbacks of the prior art.

According to the concept of present invention, the best solution for the environment and for consumers is to actually make the toilet paper immediately before use (on-demand) - directly in the bathroom (*in situ*) - since this would require minimum additional handling, transport, effluent, and energy consumption.

The object is solved by the device as claimed in claim 1, the method as claimed in claim 9, and the sponge product as claimed in claim 12. Advantageous embodiments are defined in the respective dependent claims. The claims are to be understood as an attempt at defining the invention in general terms.

In embodiments, the device generally includes a precursor container, a foaming member, an extrusion chamber and a fixing chamber. The device generally operates as follows: Upon a user command, the precursor is released from its container and is foamed and extruded (in a single step or in subsequent steps). The extruded foam is then dried so as to be ready for use. The product so manufactured generally comprises an inner, relatively moist layer with gas-filled bubbles, and an outer layer or outer layers which are relatively drier and have open pores. The inner and outer layer(s) need not have a visible boundary layer, but there may be a gradual transition between the drier outer layer and the moister inner part with bubbles.

In embodiments, the device enables a user to activate it when and where the product is needed, and with a particular design or other properties as desired under the circumstances. In embodiments, the device includes a replaceable precursor container, which may be distributed by mail directly from the manufacturer. The base paste may comprise a minimum amount of liquid materials such as water to make the base paste more flowable. Since the contemplated site of installing the device is a bathroom, in embodiments the base material may be devoid of water, which in that case may be admixed via home appliances such as a water tap so as to form the base paste. In such embodiments, the device may comprise a precursor mixing chamber, into which a base material and water may be filled and which may include means for mixing. In this case, the dry base material may contain reactants which upon addition of water form a gas, such as CO₂. Also, the mixing chamber may be pressurized or sealed against ambient pressure.

In embodiments, the device may comprise an absorbent reservoir to accommodate a supply of absorbent, in particular a water absorbent such as a drying powder or a superabsorbent.

In embodiments, the device may comprise a cartridge containing a pressurized gas, such as nitrogen, compressed air, nitrous oxide (N₂O), CO₂ or a mixture of any of these. Alternatively or additionally, the device may comprise a compressor for *in situ* providing compressed air. In embodiments, the base paste comprises a pressure-liquefied gas such as isobutane, which upon decompression during extrusion forms bubbles all by itself without the need for any hardware. Else, the base paste may be foamed by pressing a gas into it, and extruding the base paste.

In embodiments, the device comprises an absorbent reservoir and a compressor or pressurized cartridge, and further comprises a duct so as to enable the flow of gas to be entrained with the absorbent from the reservoir. In this manner, e.g. a powder may be blown into the base paste to assist subsequent drying from the inside.

In embodiments, the device includes a heater for heating air or other gas blown towards the extruded foam so as to enhance evaporation of water and/or other wet material from the foam. In so operating, it may be desirable to also evaporate perfume or fragrances included in the base paste, which are thus liberated at the request of the user at a most suitable time. In embodiments, the extruded foam is directly heated by microwaves or ultrasound, so as to evaporate excess water from its surface.

In embodiments, the components of the device are all contained in a common housing fitting in a bathroom. To this end, in embodiments the housing may have a volume of less than 1 m³.

In embodiments, the method comprises foaming a base paste comprising starch and cellulose, extruding the foam through one or more slit-like openings, a row of nozzles or even multiple rows of nozzles, and drying the extruded foam while it is hanging from the openings or nozzles, respectively. The starch or the cellulose in the base paste may be pre-digested, partially hydrolyzed, derivatized, purified or modified.

In embodiments, the foaming may be aided or accomplished by whipping the base paste under compressed air and/or other gas.

In embodiments, the drying may comprise admixing a moisture-absorbing agent to the base paste prior to extrusion; or may comprise blowing a drying agent, such as talcum powder, onto the extruded foam. In embodiments, there may be a re-wetting step with e.g. alcoholic fragrance solution, perfume or skin soothing substances.

In embodiments, the product may be printed on and/or embossed so as to give it a desired design and/or surface texture. This design and/or texture may be selectable via a user interface.

In embodiments, the product so manufactured has relatively more closed pores, or rather bubbles, in its interior filled with the foaming gas, and relatively more open pores on its surfaces. The overall structure is a sheet-like material in which one extension (thickness) is much smaller than the other two (length and width). In embodiments, the relative amount by dry weight of starch exceeds that of the cellulose. In certain applications, however, there may be as much, or more cellulose than starch; or even no starch at all. In all these cases, it is contemplated that the gas bubble volume proportion be more than 10%, or more than 30%, or more than 50% of the total volume of the product. The bubbles' volume proportion may be less than 90%, or less than 75% of the total volume of the product. It is contemplated that the source of the starch and cellulose be environmentally friendly. In embodiments, the relative moisture content of the interior layer is higher than that of the outer, surface layers. In particular, the overall moisture content may be from 15% to 70% by weight, or from 25% to 50%, or from 30% to 40%. In embodiments, the cellulose dry weight proportion may be from 5% to 60%, or from 10% to 50%, or from 15% to 30%. In embodiments, the starch dry weight proportion may be from 35% to 95%, or from 50% to 80%, or from 55 to 70%.

The invention is further described in the examples below, which are to be understood as explanatory and non-limiting:
- Figure 1: shows a first embodiment of the method using a wet pre-mix;
- Figure 2: shows a second embodiment of the method using a dry pre-mix;
- Figure 3: shows the outer dimensions of the dispenser according to the invention;
- Figure 4: shows details of the control and status panel;
- Figure 5: shows details of the functional components of the device of present invention; and
- Figure 6: shows the general structure of the product.

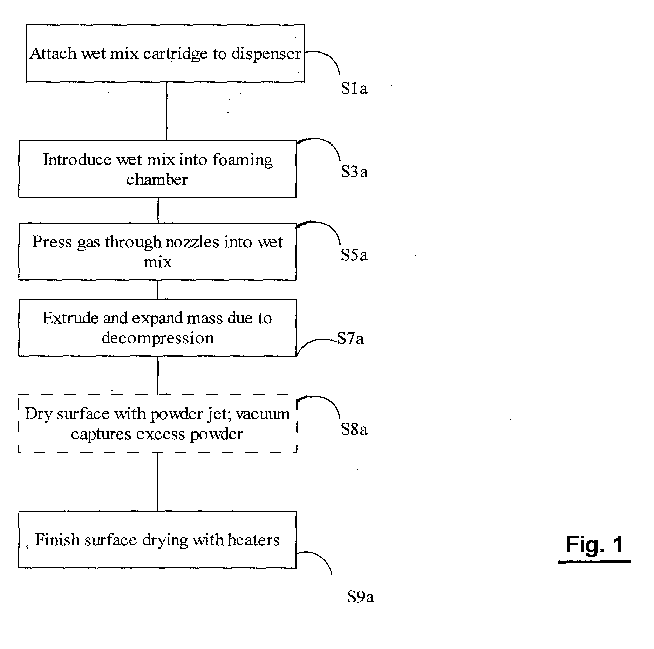

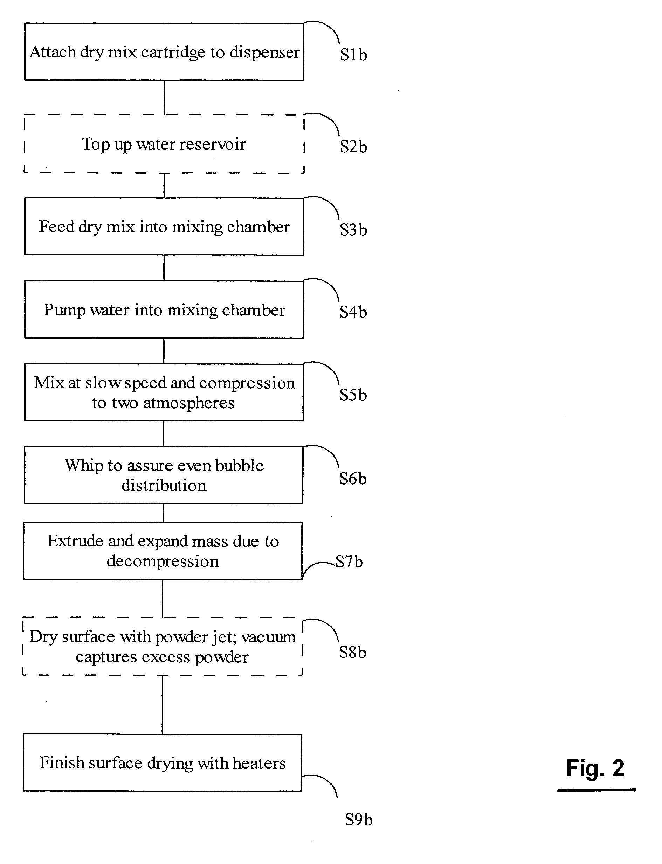

The method of operating the apparatus, and to manufacture the product, is shown in Figs. 1 and 2. The first embodiment of the method, shown in Fig. 1, uses a wet pre-mix, which is supplied in a replacement cartridge. Same is attached S1a to the dispenser and, upon a user command, the wet pre-mix forming a base paste mainly comprising water, starch and cellulose is introduced S3a into a foaming chamber. This may be accomplished either by gravity feeding or using a controllable pump. Then, a foaming gas is pressed S5a into the base paste. In alternative embodiments, this step may be omitted, if a pressure-liquefied gas such as isobutane is already contained in the pressurized pre-mix. Thereafter, or simultaneously, the mass is extruded through a slit, a row of nozzles, or multiple rows of nozzles, so that the mass expands S7a due to decompression. Optionally, the surface may then be pre-dried S8a with a powder jet, vacuum capturing excess powder. The surface drying is then finished S9a with heaters, which may be resistor wires, microwave horns or ultrasound transducers. If desired, the texture may be varied (not shown) with an embossing means either before or after dry-finishing. The product may be re-moistened with fragrances or perfume (also not shown). The product then hangs from the dispenser, ready to hand. The entire process starting from the user command may take one or several minutes, typically less than 10 minutes, preferably less than 2 minutes.

In an alternative embodiment, which is shown in Fig. 2, the method uses a dry pre-mix, which is supplied in a replacement cartridge. Same is attached S1b to the dispenser and, if necessary, the water reservoir is topped up S2b. Step S2b may also be completed prior to step S1b, e.g. during idle periods. In a variant, this is accomplished automatically whenever necessary, as determined by a sensor, via a controlled valve in a tap water pipe. Upon a user command, the dry pre-mix is gravity fed S3b into a mixing chamber, and water is pumped S4b into the mixing chamber. The pre-mix and the water are then mixed at slow speed and compression to e.g. two atmospheres S5b. Whipping S6b may assist in assuring an even bubble distribution. The base paste so formed is extruded S7b through a slit, a row of nozzles, or multiple rows of nozzles, so that the mass expands due to decompression. Optionally, the surface may then be pre-dried S8b with a powder jet as in the first embodiment. The surface drying is then finished S9b with heaters. Again, the texture may be varied, and/or the product may be perfumed.

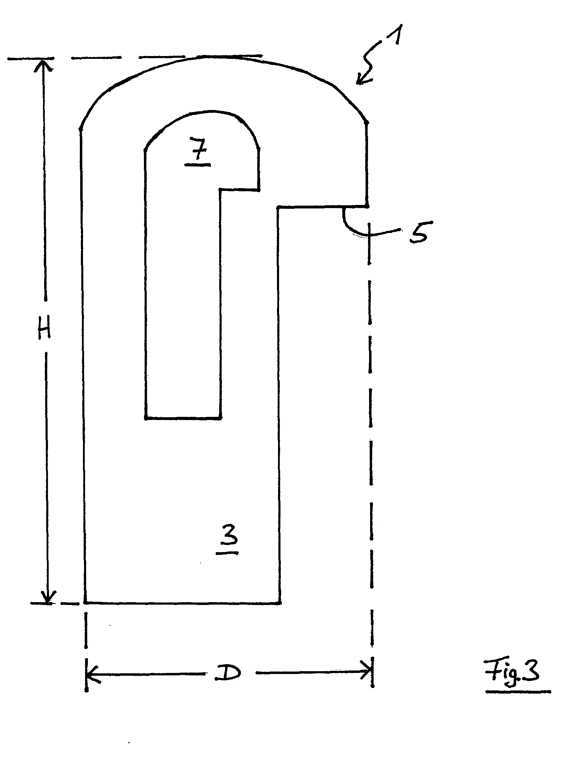

Fig. 3 shows the dispenser's 1 general structure: A housing 3 accommodates a water reservoir, a mixing/whipping chamber, an extruder, a powder jet/vacuum unit, and heaters near the outlet 5. The entire operation of the dispenser 1 is controlled via a control and status touch screen panel 7. The housing's height H (top-bottom), in this example is 80 cm, its width D (left-right) is 40 cm. Its depth (front-rear) may be somewhere between 15 cm to 20 cm. Accordingly, the overall volume will be in the approximate range 0.04 m³ to 0.075 m³. Naturally, in variants, the height may be reduced in specific environments (overhead dispenser), and, if required, the width and/or depth accordingly increased. It is desirable to keep the total volume of the dispenser below 1 m³, preferably below 0.1 m³; and above 0.005 m³, preferably above 0.025 m³, as otherwise the replacement cartridge(s) would have to be replaced too often.

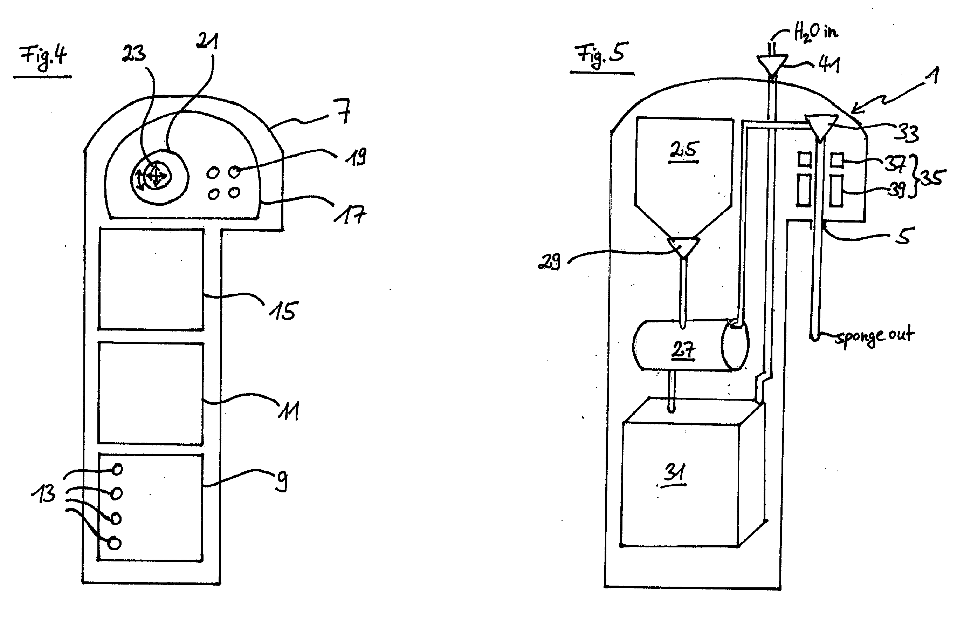

As shown in Fig. 4, the touch screen panel is divided into several sections. One of these, status monitoring section 9, comprises a number of simple status indicators such as LEDs 13 for indicating the presence of dry mix or water, the proper functioning of power supply, or other (pressurizing gas etc.). Another, input section 11 is an alphanumeric keypad for enabling the user to input data or to program the device. Yet another, output section 15 includes a text screen for detailed instructions, internet access etc. Furthermore, the control and status touch screen panel 7 includes a control section 17 which comprises controls 21, 23 for setting "luxury level" and easy preference settings 19. In the example, there is provided a two-dimensional touch pad 21 representing a two-parameter space (such as moisture and temperature), and the desired parameter combination of the sponge product is selected by the user by dragging or rotating (indicated by arrows) the indicator circle 23 to the appropriate position and/or orientation on the pad 21.

The device may include a controller having a memory, which is adapted to store pre-defined parameter sets. The user may thereby select entire desired parameter settings by the pressing of a single button 19. Also, there may be control wiring connecting the controller to the various controllable valves, pumps, actuators and the like, explained hereinbelow.

The interior of the dispenser 1 is shown in some detail in Fig. 5: From a reservoir 25, the dry-mix is fed to a mixing chamber 27 via a controllable valve 29. Water from a water tank 31 is pumped (pump not shown) into the mixing chamber 27. The dry mix may contain such substances which react with one another to produce a gas, such as CO₂. In particular, sodium bicarbonate and tartaric acid may be used for this purpose. An optional compressor for pressurizing the mixing chamber 27 is also not shown. The mixing chamber may contain whipping means such as a beater or agitator (not shown) to aid aeration. The aerated mixture is pumped to the extruder 33, where extrusion begins and the mass expands, forming a foam. The foam passes a drying section 35 comprising a powder jet 37 and heaters 39 which finishes the surface drying. The ready-to-hand product exits the dispenser through outlet 5. In this example, the water is provided via a controllable valve 41. This valve may also be manually operated. In another variant, which is not shown separately, the heating section may comprise means to recover the evaporated water, and feed it back to the water reservoir. In other embodiments, the water tank may be omitted entirely, and the water may be supplied directly from the tap. In yet other embodiments, a wet base paste already containing sufficient water is foamed with a pressurized gas from a replaceable cartridge, or from a compressor. In this embodiment, there is an additional, absorbent reservoir, preferably having a connection to a gas duct from the compressor or cartridge to the foaming chamber. The gas flow may thus be entrained with the (super) absorbent powder so as to aid drying the product from its inside. The drying powder optionally used as a pre-drying means may comprise talc (hydrated magnesium silicate) or alum (hydrated aluminum potassium sulfate) or, in particular in the latter case, additional skin-soothing substances like chamomile or aloe vera.

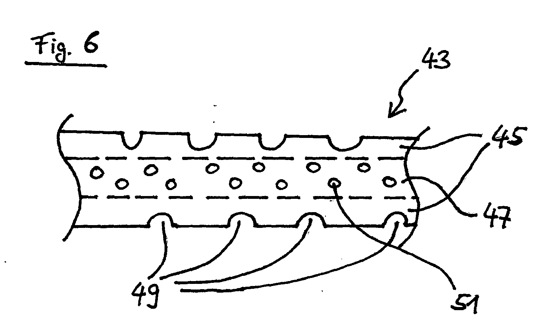

Fig. 6 shows the general structure of the sponge product 43 so manufactured: The surfaces are comprised of outer layers 45 having an open pore 49 structure, which is relatively dry, and contains much more solid materials than remaining moisture. The interior is formed of a moister layer 47 containing closed pores 51 filled with the foaming gas. This layer also contains solid materials, but their proportion is less than their proportion in the outer layers, and may even be less than 50%, meaning that there is more wet material (mostly water) than solid materials in the inner layer. The solid materials are mainly made up of cellulose and starch or their derivatives, in particular more starch than cellulose.

To summarize, the invention provides a system of a sponge making device in the vicinity of a toilet (say, less than 1 or 2 m distant) with replaceable pre-mix cartridges. When demand for the product is foreseeable, the user of the toilet input the desired properties of the sponge product in terms of moisture, temperature, texture and/or smell and the desired quantity, and within minutes the device mixes the appropriate amounts of powder or base paste, optionally water and gas or air so as to provide an extrudable foam. While still hanging, the extruded foam is then dried according to the user settings to form a sponge and used according to necessities. The product, due to its composition, will readily disintegrate in the flush water, and partly or wholly may even dissolve.

The invention thus enables the handling, transport, effluent, and energy consumption associated with toilet "paper" to be minimized. In particular, the cost of storing and transporting the air necessarily contained in high bulk soft tissue (reciprocal density 6 cm³/g or more) is by far reduced by transporting only the pre-mix cartridges. Same are therefore adapted to be removably attached, under sealing conditions, to the dispenser of the present invention.

## Claims

1. An on-demand, in-situ sponge making device, comprising:
a precursor container for providing a base paste;
a foaming member for providing the base paste with gas-filled bubbles (51);
an extrusion chamber (33) having an opening or openings for extruding the foamed paste therethrough; and
a fixing chamber (35) for drying the extruded paste.

2. The sponge making device according to claim 1, wherein the precursor container contains a base paste comprising a composition containing a starch derivative and cellulose.

3. The sponge making device according to claim 1 or 2, further comprising an absorbent reservoir.

4. The sponge making device according to one of claims 1 to 3, wherein the foaming member comprises a cartridge containing a pressurized gas.

5. The sponge making device according to one of claims 1 to 3, wherein the foaming member comprises a compressor.

6. The sponge making device according to claim 4 or 5, comprising the absorbent reservoir, wherein a duct for guiding pressurized gas to the base paste is in fluid connection to the absorbent reservoir.

7. The sponge making device according to one of claims 1 to 6, wherein the fixing chamber comprises a heater (39) for heating air blown towards the extruded paste.

8. The sponge making device according to one of claims 1 to 7, wherein the precursor container, the foaming member, the extrusion chamber (33) and the fixing chamber (35) are accommodated within a common housing having a volume of less than 1 m³ so as to fit in a bathroom.

9. A method of manufacturing sponge, the method comprising:
foaming (S5a; S5b) a base paste comprising starch and cellulose;
extruding (S7a; S7b) the foamed paste through a slit; and
drying (S9a; S9b) the extruded paste while it is freely suspended.

10. The method according to claim 9, wherein the foaming comprises pressing air (S5a) into the base paste.

11. The method according to claim 9 or 10, wherein the drying comprises admixing a moisture-adsorbing agent to the base paste prior to extrusion.

12. A sponge product, comprising:
a surface layer (45) comprising a porous composition comprising mainly a starch derivative and cellulose; and
an interior layer (47) comprising gas-filled bubbles (51) in a moist matrix comprising water, the starch derivative and cellulose;
wherein the relative amount by dry weight of the starch derivative preferably exceeds the relative amount by dry weight of the cellulose.

13. The sponge product according to claim 12, wherein the relative amount by dry weight of the cellulose is from 5% to 30%, preferably from 10% to 25%, more preferably from 15% to 20%.

14. The sponge product according to claim 12 or 13, wherein the relative amount by dry weight of the starch derivative is from 35% to 95%, preferably from 50% to 80%, more preferably from 60% to 75%.

15. The sponge product according to one of claims 12 to 14, wherein the total amount of moisture is from 15% to 70%, preferably from 25% to 50%, particularly from 30% to 40%.
